(19) Europäisches Patentamt
European Patent Office
Office européen des brevets

(11) Veröffentlichungsnummer: **0 166 235**
**B1**

(12) # EUROPÄISCHE PATENTSCHRIFT

(45) Veröffentlichungstag der Patentschrift: **01.04.87**

(51) Int. Cl.⁴: **C 09 G 1/10**

(21) Anmeldenummer: **85106469.1**

(22) Anmeldetag: **25.05.85**

(54) **Fussbodenpflege-Emulsionen auf Basis von Ethylencopolymerisat-Wachsen.**

(30) Priorität: **30.05.84 DE 3420168**

(43) Veröffentlichungstag der Anmeldung: **02.01.86 Patentblatt 86/1**

(45) Bekanntmachung des Hinweises auf die Patenterteilung: **01.04.87 Patentblatt 87/14**

(84) Benannte Vertragsstaaten: **AT BE CH DE FR GB IT LI NL SE**

(56) Entgegenhaltungen:
**EP - A - 0 053 668**
**FR - A - 1 541 214**
**FR - A - 1 577 727**

(73) Patentinhaber: **BASF Aktiengesellschaft, Carl-Bosch-Strasse 38, D-6700 Ludwigshafen (DE)**

(72) Erfinder: **Brandstetter, Franz, Dr., Ritterbueschel 45, D-6730 Neustadt (DE)**
Erfinder: **Ziegler, Walter, Dr., Starenweg 15, D-6803 Edingen-Neckarhausen (DE)**
Erfinder: **Dietsche, Wolfram, Dr., Albrecht-Duerer-Ring 34B, D-6710 Frankenthal (DE)**
Erfinder: **Weiss, Stefan, Dr., Carl-Beck-Strasse 46, D-6903 Neckargemuend (DE)**
Erfinder: **Hettche, Albert, Dr., Kleiststrasse 12, D-6717 Hessheim (DE)**
Erfinder: **Kuehneweg, Otto, Denisstrasse 3, D-6702 Bad Duerkheim (DE)**

EP 0 166 235 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine wässerige Wachsdispersion für die Fussbodenpflege, die eine Mischung aus einer wässerigen Sekundärdispersion eines Ethylencopolymerisat-Wachses, charakterisiert durch einen speziellen MFI-Wert, und einer wässerigen Primärdispersion neben Weichmachern, Verlaufsmitteln und Wasser enthält, und die Verwendung eines Ethylencopolymerisat-Wachses in Form einer wässerigen Sekundärdispersion für Fussbodenemulsionen.

Ethylen-Copolymerisate mit ungesättigten Carbonsäuren, wie Acryl-, Methacryl-, Croton-, Maleinsäure u.a., und ihre Verwendung als emulgierbare Wachse sind grundsätzlich bekannt.

In der GB-PS 929 643 wird die Herstellung von derartigen Wachsen durch Polymerisation bei Temperaturen zwischen 20 und 250° C, bei Drukken zwischen 100 bis 2.000 bar in Gegenwart radikalbildender Initiatoren und organischer Lösungsmittel in diskontinuierlicher Fahrweise beschrieben. Aus der DE-AS 17 20 232 ist ein kontinuierliches Herstellungsverfahren bekannt, bei dem die Polymerisation in Gegenwart eines radikalbildenden Initiators bei 100 bis 300° C und bei Drucken von 250 bis 600 bar durchgeführt wird. In beiden Fällen erhält man Wachse mit Schmelzviskositäten bei 140° C von 100 bis 1.200 mPa·s, d.h. relativ niedrige Molekulargewichte. Diese Wachse weisen in der Regel ein ausreichendes Emulgierverhalten auf. Ihre Säurezahlen liegen insbesondere bei 45 bis 80. Insbesondere die Ethylen/(Meth)Acrylsäure-Wachse sind aufgrund ihrer Schmelzviskositäten, d.h. wegen des relativ niedrigen Molekulargewichts, für den Bereich der Fussbodenpflege weniger geeignet, da ihre Eigenschaften beim mechanischen Begehverhalten zu wünschen übriglassen. Es zeigte sich, dass die relativ niedermolekularen Ethylen-Acrylsäure-Copolymere mit einer relativ hohen Säurezahl aufgrund ihrer zu hohen Klebrigkeit im Begehtest auf frequentierten Fussbodenbelägen eine sehr schlechte Schmutzabweisung aufweisen.

In der Praxis werden daher für die Fussbodenpflege emulgierbare Synthesewachse mit höheren Molekulargewichten, wie sie beispielsweise in den deutschen Patentschriften 1 180 131, 1 237 783 oder der FR-PS 1 343 962 als sogenannte Schmelzoxidate des Polyethylens beschrieben werden, bevorzugt. Diese Wachse weisen bei gleichgutem Emulgierverhalten und Säurezahlen von nur etwa 15 bis 20 ein besseres Begehverhalten auf. In der DE-OS 30 44 519 wird beschrieben, dass man die Säurezahl des verwendeten Wachses nicht höher wählen sollte, als zur Emulgierung und damit zu einer zweckmässigen Verarbeitung gerade noch notwendig ist, da mit der Zunahme der Säurezahl die Hydrophilie zu- und damit die wasserabstossende Wirkung abnimmt. Diese Schlussfolgerung ergibt sich, wenn man bedenkt, dass die für den Fussbodenpflegebereich in der Regel hervorragend geeigneten Polyethylenoxidate sich durch eine niedrige Säurezahl und ein hohes Molekulargewicht auszeichnen. Als besonders geeignet erweisen sich Säurezahlen von unter 40, da eine höhere Säurezahl erhöhte Hydrophilie und verschlechterte Schmutzabweisung der Pflegeemulsion bedeutet.

Es wird darauf hingewiesen, dass Wachse, wenn sie zur Bildung von Filmen für die Fussbodenpflege herangezogen werden, nicht nur harte, sondern auch zähe, kratzfeste und nichtklebende Überzüge ergeben sollen. In der Praxis muss dabei häufig ein Kompromiss im Hinblick auf ein Optimum zwischen den vier Eigenschaften eingehalten werden.

Das Ziel der Bemühungen der Anmelderin bestand somit darin, wachsartige Copolymerisate aufzufinden, die neben Farb- und Geruchlosigkeit, im Film Zähigkeit, Kratzfestigkeit, Nichtklebrigkeit und gute Schmutzabweisung aufweisen. Weitere Voraussetzungen sind gutes Emulgierverhalten, so dass ein möglichst niedriger Anteil an zusätzlichen Emulgatoren und an Alkali erforderlich ist. Dieses Ziel wird mit speziellen Ethylencopolymerisaten erreicht.

Gegenstand der Erfindung ist eine Wachsdispersion für die Fussbodenpflege, enthaltend, bezogen auf das Gesamtgewicht der Wachsdispersion, eine Mischung aus

1. 5 bis 20 Gew.% einer wässerigen sekundären Wachsdispersion aus, bezogen auf die sekundäre Wachsdispersion, 5 bis 40 Gew.% eines Ethylencopolymerisatwachses, bestehend aus 10 bis 25 Gew.%, bevorzugt 15 bis 24 Gew.%, einer α-olefinisch ungesättigten Mono- oder Dicarbonsäure mit 3 bis 8 C-Atomen und 90 bis 75 Gew.%, bevorzugt 85 bis 76 Gew.%, Ethylen mit einem MFI-Wert, gemessen bei 190° C und 2,16 kp Belastung, von 1 bis 600, bevorzugt 5 bis 500, oder einem MFI-Wert, gemessen bei 160° C und 325 g, von 1 bis 600, 0,1 bis 5 Gew.% Alkalihydroxid, Ammoniak, ein Alkanolamin oder ein Dialkylalkanolamin und ihre Mischungen, gegebenenfalls 1 bis 5 Gew.% eines nichtionischen oder anionischen Emulgators und Rest Wasser zu 100% und
2. 20 bis 50 Gew.% einer wässerigen Primärdispersion mit einem Feststoffgehalt von 20 bis 70 Gew.%,
3. 1 bis 8 Gew.% eines oder mehrerer Weichmacher,
4. 0,2 bis 2 Gew.% Verlaufsmittel und
5. 73,8 bis 20 Gew.% Wasser.

Das Überraschende der Erfindung liegt darin, dass Copolymerisate mit gegenüber dem Stand der Technik deutlich höherem Anteil an α-olefinisch ungesättigten Carbonsäuren und höherem Molekulargewicht, entsprechend niedrigeren MFI-Werten, beispielsweise den in der DE-OS 30 44 519 oder der DE-AS 17 20 232 beschriebenen Produkten deutlich überlegen sind. Obwohl die erfindungsgemässen Produkte in der Härte nicht höher sind, zeigen sie bei der Anwendung in der fertigen Bodenpflegeformulierung im Begehverhalten hervorragende Ergebnisse, die nicht nur die bisher erprobten Ethylen/α-olefinisch ungesättigten Carbonsäure-Copolymerisate übertref-

fen, sondern auch Polyethylenoxidaten überlegen sind, die in den letzten Jahren auf dem Fussbodenpflegebereich mit die derzeit besten Produkte darstellen.

Gegenstand der Erfindung ist daher auch die Verwendung von Ethylen-Copolymerisaten, wie unter 1 definiert, als wässerige sekundäre Wachsdispersionen für die Fussbodenpflege, insbesondere zur Erhöhung der mechanischen Festigkeit des trockenen Bodenbelages, zusammen mit an sich üblichen primären Wachsdispersionen und Zusätzen.

Unter dem Begriff Primärdispersion wird die filmbildende Grundlagen- oder Trägeremulsion einer Fussbodenselbstglanzemulsion verstanden. In der Regel enthält eine Primärdispersion ein Copolymerisat, das für sich allein kein Wachs darstellt. Diese Primärdispersion wird mit speziellen Wachsprodukten beispielsweise in Form einer wässerigen Dispersion, einer sogenannten Sekundärdispersion, versetzt, wodurch die mechanischen Eigenschaften des Fussbodenbelags entscheidend verbessert werden. Übliche, oft verwendete Sekundärwachse sind z.B Polyethylenoxidate. Das Besondere an der vorliegenden Erfindung liegt u.a. darin, dass entgegen der bisherigen Übung nicht ausgesprochene Hartwachse verwendet werden.

Die erfindungsgemäss zu verwendenden Copolymerisate des Ethylens enthalten 10 bis 25, bevorzugt 15 bis 24 Gew.% α-olefinisch ungesättigte Mono- oder Dicarbonsäuren mit 3 bis 8 C-Atomen, von denen beispielsweise Acrylsäure, Methacrylsäure, Crotonsäure, Maleinsäure, Fumarsäure und Itaconsäure genannt seien. Davon sind Acrylsäure oder Methacrylsäure und ihre Mischungen besonders bevorzugt.

Die Ethylen-Copolymerisatwachse sind erfindungsgemäss charakterisiert durch einen speziellen MFI (Melt Flow Index) oder Schmelzindex. Der MFI gibt die Menge der Polymerisatschmelze in Gramm an, die bei einer bestimmten Temperatur durch eine Düse von bestimmten Abmessungen bei einem bestimmten Kraftaufwand (Belastung) gedrückt werden kann. Die Bestimmung der Schmelzindices (MFI-Einheiten) erfolgt nach folgenden Normvorschriften, ASTM D 1238-65 T, ISO R 1133-1696 (E) oder DIN 53 735 (1970), die untereinander identisch sind. Der MFI ist eine Grösse, die auf dem Polymersektor benutzt wird, um Anhaltspunkte bezüglich des Molekulargewichts zu erhalten. Da die exakte Molekulargewichtsbestimmung unter Umständen sehr aufwendig ist, bedient man sich zur Vereinfachung bei chemisch gleich aufgebauten Polymeren des MFI-Wertes. Hoher MFI-Wert deutet auf relativ niedriges, niedriger MFI-Wert auf relativ hohes Molekulargewicht hin. Ob, wie oben angegeben, bei 190° C oder 160° C gemessen wird, hängt vom Schmelzverhalten im Zusammenhang mit dem Molekulargewicht ab. Es wird darauf hingewiesen, dass grundsätzlich Produkte, die bei 190° C und 2,16 kp gemessen werden, höhermolekular sind als solche, die bei 160° C und 325 g Belastung gemessen werden.

Die erfindungswesentlichen speziellen MFI-Werte der zu verwendenden Ethylencopolymerisatwachse betragen, gemessen bei 190° C und 2,16 kp 1 bis 600, bevorzugt 5 bis 500 und ganz besonders bevorzugt 15 bis 300 oder für die Messung bei 160° C und 325 g 1 bis 600. Wachse, die bei 190° C und 2,16 kp einen entsprechenden MFI-Wert aufweisen, müssen nicht notwendigerweise auch bei einer Messung bei 160° C und 325 g im erfindungswesentlichen Bereich liegen und umgekehrt. Die höhermolekularen bei 190° C gemessenen Wachse sind die besonders bevorzugten.

Ein weiteres allgemeines Kennzeichen von Wachsen ist die Höppler-Härte, die für die erfindungsgemässen Ethylencopolymerisatwachse 200 bis 600, bevorzugt 300 bis 500 bar, gemessen bei 23° C nach der DGF-Einheitsmethode M III9a(57), beträgt.

Bei der Anwendung der speziellen Ethylencopolymerisatwachse in Fussbodenemulsionen ist der Befund überraschend, dass trotz einer nur mässigen Härte hervorragende Eigenschaften im Begehtest aufgezeigt werden können. Bisher wurde in der Praxis davon ausgegangen, dass nur sehr harte Wachse, ab 700 bis 800 bar Höppler-Härte, zu einer Verbesserung im Begehtest führen können.

Die Säurezahlen der erfindungsgemässen speziellen Wachse liegen bei 70 bis 200, bevorzugt 120 bis 170.

Weiterhin enthält die erfindungsgemässe Sekundärdispersion 0,1 bis 5, bevorzugt 1 bis 3 Gew.% Alkalihydroxid, bevorzugt Kaliumhydroxid oder Natriumhydroxid, Ammoniak, ein Mono-, Di- oder Trialkanolamin mit jeweils 2 bis 18 C-Atomen im Hydroxyalkylrest, bevorzugt 2 bis 6 C-Atomen, oder Mischungen der genannten Alkanolamine oder ein Dialkyl-monoalkanolamin mit jeweils 2 bis 8 C-Atomen im Alkyl- und Hydroxyalkylrest oder ihre Mischungen. Als Amine seien beispielsweise genannt Diethanolamin, Triethanolamin, 2-Amino-2-methylpropanol-(1) oder Dimethylethanolamin.

In der Regel wird innerhalb des oben angegebenen Bereichs ein Alkalihydroxid, Ammoniak oder Alkanolamin in einer Menge angewendet, bei der höchstens etwa 2/3 der Carboxylgruppen neutralisiert werden.

Als gegebenenfalls zu verwendende, nichtionische oder anionische Emulgatoren für die Sekundärdispersion kommen an sich übliche Emulgatoren, insbesondere Oxoalkoholethoxylate, Ethoxylate geradkettiger oder verzweigter Fettalkohole oder Alkylphenolethoxylate, bevorzugt in Mengen von 1 bis 3 Gew.%, bezogen auf die Sekundärdispersion, in Betracht.

Bei der Primärdispersion handelt es sich um an sich übliche filmbildende Primärdispersionen für die Fussbodenpflege.

Es handelt sich insbesondere um wässerige Dispersionen von gegebenenfalls mit Metallionen vernetzten wasserunlöslichen Copolymerisaten, die als Monomereinheiten carboxylgruppenhaltige Comonomere und carboxylgruppenfreie monoethylenisch ungesättigte Verbindungen, die gegebenenfalls mindestens eine zur kovalenten Vernetzung der Copolymerisate befähigte reaktive Gruppe tragen, einpolymerisiert enthalten, wobei die Dispersionen mindestens 20% an Feststoffen enthalten und einen pH-Wert von 7 bis 11 aufweisen, wie sie beispielsweise der EP-Patentschrift 6547 entnommen werden können.

Von den carboxylgruppenfreien Monomeren seien beispielsweise genannt Ester der Acrylsäure oder Methacrylsäure mit einem gesättigten, einwertigen aliphatischen Alkohol, insbesondere mit einem Alkohol mit 1 bis 4 C-Atomen, wie Methanol, Ethanol, n- und Isopropanol, n-Butanol, Isobutanol, sek.-Butanol und tert.-Butanol.

Die Acrylsäure- und Methacrylsäurealkylester mit 1 bis 4 C-Atomen im Alkyl und ihre Mischungen werden, bezogen auf das Copolymerisat, in 30 bis 95 gew.%iger Menge verwendet. Neben den Acrylsäure- und Methacrylsäureestern kommen als zusätzliche Copolymere in einer Menge von 5 bis 55, bevorzugt 30 bis 50 Gew.%, bezogen auf das Copolymerisat, Acrylnitril, Vinylacetat, Styrol, Vinylchlorid oder Vinylidenchlorid in Betracht. Davon ist das Styrol in einer Menge von 5 bis 20 Gew.% besonders bevorzugt.

Carboxylgruppenhaltige Copolymere, die zweckmässigerweise in einer Menge, bezogen auf das Copolymerisat, von 8 bis 12 Gew.% einpolymerisiert werden, sind Acrylsäure und Methacrylsäure. Als weitere Komponente, bezogen auf festes Copolymerisat, kommen 0,5 bis 2,5 Gew.% N-Methylolacrylamid oder N-Methylolmethacrylamid, die beide eine zur kovalenten Vernetzung der Polymerisate befähigte Gruppe enthalten, in Betracht. Das genannte Copolymerisat wird nach an sich bekannten Methoden in Form einer Emulsionscopolymerisation hergestellt. Gegebenenfalls kann die fertige Dispersion zusätzlich noch ein nichtionisches Dispergiermittel enthalten.

Durch Anwesenheit von Metallionen werden die Copolymerisate dieser Primärdispersion infolge der Anwesenheit freier Carboxylgruppen ionisch vernetzt. Zuzusetzende Metallionen sind insbesondere Ionen des Beryliums, Magnesiums, Zinks, Bariums, Strontiums, Aluminiums, Wismuts, Antimons, Kobalts, Eisens, Nickels aber auch anderer mehrwertiger Metalle. Die Ionen werden in Form von Metallverbindungen eingesetzt und man verwendet zweckmässigerweise die Metallverbindung in einer Menge von 0,3 bis 5 Gew.%, bezogen auf das Copolymerisat, vorzugsweise von 0,4 bis 3%.

Als Metallverbindungen kommen insbesondere diejenigen in Betracht, die in Wasser zu wenigstens 1 Gew.% löslich sind, also beispielsweise Hydroxide, Oxide, basische, neutrale oder saure Salze, wie Acetate, aber auch Ammoniak oder Aminkomplexe, insbesondere des Zinks oder Calciums.

Eine besonders bevorzugte Primärdispersion, die zusammen mit dem erfindungsgemäss zu verwendenden Wachs in Form einer Sekundärdispersion vorteilhafte Ergebnisse aufweist, enthält ein mit Metallionen vernetztes wasserunlösliches Copolymerisat, bestehend aus 70 bis 90 Gew.% mindestens eines Acryl- oder Methacrylsäurealkylesters mit 1 bis 4 C-Atomen im Alkyl, insbesondere Methylmethacrylat, Ethylacrylat und Butylacrylat, 5 bis 20 Gew.% Styrol, 8 bis 12 Gew.% Acrylsäure oder Methacrylsäure und ihre Mischungen, 0,5 bis 2,5 Gew.% N-Methylolacrylamid oder N-Methylolmethacrylamid und 0,4 bis 3 Gew.% Metallionen, insbesondere des Zinks.

Diese Primärdispersionen weisen einen Feststoffgehalt von vorzugsweise 30 bis 70 Gew.% auf. Ihr pH-Wert beträgt, insbesondere bedingt durch die Polymerisationsbedingungen und den Metallzusatz, 7 bis 11, vorzugsweise 8 bis 10. Er kann durch Zusatz von beispielsweise Ammoniak beliebig eingestellt werden. Die erhaltenen Dispersionen können beliebig mit Wasser verdünnt und auf die je nach Anwendungszweck gewünschte Konzentration eingestellt werden.

Wird diese Primärdispersion auf ein Substrat aufgebracht, so trocknet sie als glänzender Film auf, wobei neben der ionischen Vernetzung eine zusätzliche kovalente Vernetzung, bedingt durch die reaktive Gruppen tragenden Comonomereinheiten, eintritt. Es resultieren daraus sehr harte, jedoch genügend elastische Überzüge mit grosser Lösungsmittel- und Wasserresistenz. Sie können leicht mit beispielsweise ammoniakhaltigem Wasser (Komplexierung des Metalls) wieder abgewaschen werden. Wie in der Praxis üblich, wird eine derartige Primärdispersion durch weitere Zusätze, welche die Eigenschaften der erhaltenen Überzüge modifizieren, weiter verbessert, wie dies durch die erfindungsgemässe Sekundärdispersion der Fall ist.

Primär- und Sekundärdispersionen bilden sozusagen Konzentrate und ihre Mischungen innerhalb der oben angegebenen Mengenverhältnisse mit weiteren an sich üblichen Zusätzen bilden die Gesamtwachsdispersion oder Gesamtformulierung für den Verbraucher. Als weitere an sich übliche Bestandteile, bezogen auf das Gesamtgewicht der Wachsdispersion, kommen in Betracht 1 bis 8 Gew.% eines oder mehrerer Weichmacher, sogenannte permanente oder temporäre Weichmacher, beispielsweise ausgewählt aus der Gruppe Methyldiglykol oder Tributoxyethylphosphat, und 0,2 bis 2 Gew.%, bezogen auf das Gesamtgewicht der Wachsdispersion, eines Verlaufsmittels, beispielsweise eines fluorhaltigen Verlaufsmittels der Formel

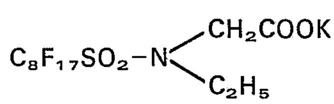

und schliesslich werden der Gesamtwachsdispersion 73,8 bis 20 Gew.% Wasser zugesetzt, so dass in der Regel für die Gesamtformulierung ein Trokkengehalt von 15 bis 50 Gew.% eingestellt wird.

Die Herstellung der Ethylencopolymerisatwachse für die Sekundärdispersion erfolgt in an sich bekannter Weise durch kontinuierliche Copolymerisation von Ethylen mit den ungesättigten Carbonsäuren in Gegenwart von radikalbildenden Initiatoren. Die Polymerisation findet bei Temperaturen von 150 bis 300° C und Drucken von 1.000 bis 3.000 bar statt. Die Polymerisation erfolgt in einphasigem Polymerisationsmedium mit Ethylenumsätzen von maximal 25%, wobei das im überkritischen Zustand vorliegende Ethylen als Lösungsmittel für das Reaktionsgemisch und die Polymerschmelze dient. Die Dosierung der α-ethylenisch ungesättigten Säuren und des verwendeten radikalischen Polymerisationsstarters in das Reaktionsgemisch erfolgt getrennt. Die Dosierung der für die Einstellung des Molekulargewichts erforderlichen Regler kann zusammen mit den Comonomeren bzw. dem radikalischen Starter erfolgen.

Im Ansatz sind, bezogen auf die Summe der Monomeren, bis 5 Gew.% an Reglern anwesend. Als Regler setzt man allgemein übliche Substanzen, die diese Funktion ausüben, ein. Hierzu gehören z.B. aliphatische Aldehyde mit 3 bis 6 C-Atomen, wie Propionaldehyd oder n-Butyraldehyd, aliphatische Ketone mit 3 bis 6 C-Atomen, wie Aceton oder Methylethylketon, α-Olefine mit 3 bis 6 C-Atomen, wie Propen, 1-Buten oder 1-Penten, oder $C_3$- bis $C_5$-Alkane, wie Propan, n-Butan oder n-Pentan. Bevorzugt werden aliphatische Aldehyde, wie Propionaldehyd oder n-Butyraldehyd eingesetzt.

Kontinuierlich werden 3 bis 25 Gew.% des Ethylens umgesetzt und das gebildete Polymerisat kontinuierlich aus der Reaktionszone entfernt.

Die Polymerisation findet im einphasigen Polymerisationsmilieu statt, wobei das im überkritischen Zustand vorliegende Ethylen als Lösungsmittel für das Reaktionsgemisch und die Polymerschmelze dient.

Auf eine zweckmässige Dosierung von Acrylsäure, Regler und Initiatoren, da sonst Nachteile, wie zu hohes Molekulargewicht, und davon abhängig schlechteres Emulgierverhalten, niedrigere Härte und somit ungünstigere Filmeigenschaften eintreten, muss natürlich geachtet werden.

Die Herstellung einer sekundären Wachsdispersion erfolgt in an sich üblicher Weise in einem Emulgier-Autoklaven. Erforderlich ist eine Temperatur von ca. 150° C und ca. 5 bar Druck. Meist wird nach dem sogenannten Eintopfverfahren gearbeitet. Dabei werden alle Komponenten, wie Wachscopolymerisat, Alkalihydroxid und/oder Amine und gegebenenfalls Emulgatoren und das Wasser in den Autoklaven eingebracht und im geschlossenen System bei mässig schnell laufenden Rührer auf Druck und Temperatur gebracht.

Die sekundäre Wachsdispersion wird mit einer Primärdispersion, entsprechender Zusammensetzung und je nach den Anforderungen an das Fussbodenpflegemittel, abgemischt und mit temporären und permanenten Weichmachern sowie einem fluorhaltigen Verlaufsmittel versetzt. Der Rest auf 100% Gewicht besteht aus Wasser.

Die so erhaltene gebrauchsfertige Fussbodenpflege-Emulsion wird mit Pinsel oder Schwamm auf Linoleum oder Hart-PVC-Belag aufgetragen und nach der Trocknung an der Luft einem sogenannten Begehtest unterzogen. Geeignet hierfür sind stark frequentierte Flure. Die Beläge, 50 × 50 cm, werden mit Kleberändern auf dem Fussboden rutschfest verankert. Nach dreiwöchiger Begehung werden die Beläge wieder entfernt und ausgewertet.

Die Erfindung wird durch die folgenden Beispiele näher erläutert. Teile sind Gewichtsteile, wenn nicht anders bezeichnet.

I Herstellung von Ethylen-Copolymerisat-Wachs

*Beispiel 1*

Eine Mischung von 349 kg/h Ethylen, 10,5 kg/h Acrylsäure und 0,5 kg/h Propionaldehyd wird bei 35° C kontinuierlich durch einen auf einem Druck von 2300 bar gehaltenen 10 l-Rührautoklaven geleitet. Durch die kontinuierliche Zugabe von 202 g t-Butylperpivalat pro Stunde (in der Regel in einem geeigneten Lösungsmittel) wird die Temperatur im Autoklavenreaktor bei 216° C gehalten. Das nach Entspannung des Reaktionsgemisches in einer Menge von 49 kg/h anfallende Polymerisat entspricht einem Umsatz von 16,9% (bezogen auf den Ethylen-Durchsatz). Es enthält 17 Gew.% Acrylsäure und hat einen Schmelzindex MFI 190/2,16 von 220.

Die folgenden Beispiele 2 bis 8 werden gemäss Beispiel 1 durchgeführt, unterschiedliche Herstellbedingungen und die Produktparameter sind in Tabellen 1a und 1b zusammengefasst.

Die in den Versuchen 1 bis 8 hergestellten Copolymer-Wachse wurden unter Verwendung von nichtionischen Emulgatoren, wie Alkoholethoxylate oder Alkylphenolethoxylate, in Gegenwart von Alkalilaugen, wie KOH oder NaOH, mit Alkalilaugen alleine oder zusammen mit Ammoniak oder mit Aminen, wie Diethylethanolamin (DEE), Dimethylethanolamin, Triethanolamin oder 2-Amino-2-methylpropanol-(1), zu hochtransparenten Emulsionen emulgiert.

Tabelle Ia

| Beispiel Nr. | Druck (bar) | T max. (°C) | T Gemisch (°C) | Ethylen-Durchsatz (kg/h) | AS-Dosierung (kg/h) | TBPPI-Dos. (g/h) | PA-Dos. (kg/h) | Ausstoss (kg/h) | Umsatz (%) | AS-Gehalt (Gew.%) | MFI 190/2,16 (g/10') | MFI 160/135 (g/10')*** |
|---|---|---|---|---|---|---|---|---|---|---|---|---|
| 2 | 2300 | 212 | 35 | 350 | 13,5 | 289,1 | 0,42 | 48 | 17,5 | 21,5 | 125 | |
| 3 | 2300 | 218 | 39 | 346 | 15,7 | 358,5 | 0,21 | 50 | 18,2 | 23,9 | 32 | |
| 4 | 2300 | 216 | 39 | 342 | 17,9 | 216,0 | – | 47 | 17,3 | 20,6 | 3,5 | |
| 5 | 2300 | 210 | 35 | 340 | 10,6 | 109,7 | 0,26 | 46 | 16,2 | 16,9 | 16,5 | |
| 6 | 2300 | 219 | 26 | 342 | 10,3 | 167,2 | 2,07 | 56 | 19,6 | 16,5 | | 490 |
| 7 | 2300 | 218 | 45 | 341 | 6,2 | 70,6 | 0,91 | 50 | 16,3 | 10,0 | | 215 |
| 8 | 2300 | 220 | 25 | 350 | 14,4 | 215,3 | 2,11 | 58 | 21,1 | 21,5 | | 600 |
| 9* | 2300 | 220 | 35 | 288 | 1,8 | (12,7**) | 0,87 | 44,8 | 15,5 | 3,65 | | 280-300 |

AS = Acrylsäure
PA = Propionaldehyd
TBPPI = tert.-Butylperpivalat

* Vergleichsbeispiel nach DE-OS 30 44 519
** tert.-Butylperisononanat
*** g pro 10 Minuten

Tabelle Ib

| Produkt Beispiel Nr. | FP °C | JFZ* 5 h/140°C | Höppler-Härte bar |
|---|---|---|---|
| 1 | 91-108 | 1-2 | 400 |
| 2 | 94-115 | 1-2 | 340 |
| 3 | 92-118 | 2 | 310 |
| 4 | 95-124 | 1-2 | 450 |
| 5 | 108-138 | 3 | 500 |
| 6 | 85- 92 | 3/4 | 480 |
| 7 | 102-108 | 4 | 520 |
| 8 | 78- 92 | 3/4 | 200 |

* Iodfarbzahl bestimmt nach DIN 6162

II Herstellung einer Sekundärdispersion

*Beispiel 10*

Zur Emulgierung des in Beispiel 1 beschriebenen Wachses werden 20 Gew.% Wachs, 2,9 Gew.% eines nichtionischen Emulgators ($C_{13}/C_{15}$-Oxoalkohol mit 8 EO (Ethylenoxid) oder $C_9/C_{11}$-geradkettige oder verzweigte Fettalkohole mit 7 EO oder Alkylphenolethoxylat mit 10 EO), 1,4 Gew.% Kaliumhydroxid und 74,4 Gew.% Wasser bei 150 bis 160° C unter 5 bis 6 bar zu einer homogenen Schmelze in einem geschlossenen Autoklaven verrührt. Zur Erzielung einer einwandfreien, stippenfreien feinteiligen Emulsion wird diese Temperatur eine Stunde gehalten. Die Wachsemulsion wird dann zügig abgekühlt. Optimal ist das Herausfahren der unter Druck stehenden Emulsion über einen Intensivkühler. Abgekühlt auf Raumtemperatur erhält man eine sehr feinteilige Emulsion – gut erkenntlich am blauen Ablauf.

Die erhaltene Emulsion zeigt in einer Verdünnung von 1:400 in einer 5 cm Küvette bei 533 nm eine Lichtdurchlässigkeit von 77%. Die Emulsion ist auch nach längerer Lagerzeit frei von Aufrahmungen. Aufstriche auf der Glasplatte verfilmen bei Zimmertemperatur zu stippenfreien klaren glänzenden, sehr zähen kratzfesten Filmen, wie sie für den Pflegemittelbereich erwünscht sind.

Die Beispiele 10 bis 21 sind in Tabelle II zusammengefasst.

Die Emulsionen 11-21 sind im wesentlichen analog der Herstellvorschrift (Beispiel 10) hergestellt worden. In einigen Fällen wurde abweichend von der obigen Vorschrift nach der sog. «Stammemulsions-Methode» verfahren. Bei dieser Methode, die insbesondere bei etwas schwer emulgierbaren Wachsen angewandt wird, erfolgt die Emulgierung zunächst unter Verwendung von nur 30 bis 60% der vorgesehenen Wassermenge. Die restliche Wassermenge wird meist erst gegen Ende des Emulgiervorganges zugedrückt.

Für die Herstellung von erfindungsgemässen Fussbodenpflegeemulsionen für den Endverbraucher werden die in Tabelle II beschriebenen Wachsemulsionen bevorzugt mit einer Primärdispersion auf Basis Acrylsäure/Styrol/Acrylester, wie beispielsweise dem EP 6547 entnommen werden kann, abgemischt. Die Mischung wird auf Linoleum oder PVC-Belag aufgetragen, an der Luft getrocknet und der entstandene dünne, hochglänzende und kratzfeste Film der üblichen Begeh-Strapazierung ausgesetzt.

III. *Herstellungsbeispiel für eine Primärdispersion*

Zu einer Lösung aus 260 Teilen Wasser und 0,4 Teilen Kaliumperoxidisulfat wird bei 95° C eine Emulsion aus 250 Teilen Wasser, 160 Teilen Methylmethacrylat, 80 Teilen Butylacrylat, 80 Teilen Ethylacrylat, 36 Teilen Styrol, 36 Teilen Methacrylsäure, 8 Teilen n-Methylolmethacrylamid, 0,2 Teilen Dodecylmercaptan, 6 Teilen Dodecylschwefelsäure-Na-Salz und 70 Teilen einer 4%igen Kaliumperoxidisulfatlösung innerhalb 2 Stunden unter Rühren zudosiert. Dann wird bei derselben Temperatur innerhalb 1 Stunde mit weiteren 20 Teilen Peroxidisulfatlösung obiger Konzentration versetzt und weitere 2 Stunden bei 85° C gerührt. Nach dem Abkühlen wird mit 10,5 Teilen Zinkionen (=2,5%) in Form einer ammoniakalischen Zinkacetatlösung versetzt und mit Ammoniak ein pH-Wert von 9 eingestellt.

IV. *Die folgende Rahmenvorschrift soll die Herstellung von erfindungsgemässen Fussbodenpflegemitteln aus Primärdispersion und Sekundärdispersion beschreiben, ohne die Erfindung einzuschränken:*

30 Teile erfindungsgemässe Sekundärwachsdispersion gemäss Beispielen 10 bis 20, 25 Teile einer Primärdispersion entsprechend Beispiel III, 41 Teile Wasser, 5 Teile Methyldiglykol, 0,9 Teile Tributoxyethylphosphat, 0,6 Teile Tributylphosphat und 1 Teil Fluortensid werden homogen gemischt.

V. Anwendungstechnische Prüfung:

Es werden nach der obigen Rahmenvorschrift IV statt 30 Teilen Sekundärdispersion jeweils so viele Teile Sekundärdispersion verwendet, die 7,5 Teilen Wachs (Acrylsäure-Ethylen-Wachs oder Vergleichswachs) in reiner Form entsprechen. Gegebenenfalls wird die zuzusetzende Menge Wasser angepasst, um gleiche Feststoffgehalte einzustellen. Dadurch wird gewährleistet, dass in der Gesamtmischung stets die gleiche Wachsmenge mit der stets gleichen Menge Primärdispersion enthalten ist.

Die Ergebnisse sind in der Tabelle III zusammengestellt.

Die Pflegemittelmischung wird mit einem feinhaarigen Pinsel auf einen Standard-PVC Fussbodenbelag aufgetragen. Bei Zimmertemperatur verfilmt die Emulsion zu einem glänzenden, zähen Pflegemittelfilm.

Die Kratzfestigkeit, Zähigkeit und Anschmutzbarkeit des Filmes wird durch einen praxisnahen Begehtest geprüft. Dazu werden 50 × 50 cm-Hart-PVC-Platten mit der Pflegemittelemulsion beschichtet, getrocknet und in einem Raum ausgelegt, wo eine stark frequentierte Begehung möglich ist.

Nach 3wöchiger Strapazierung wird die Anschmutzbarkeit, Bildung von Absatzstrichen und die Kratzfestigkeit beurteilt. Als Vergleichsmassstab dient eine marktübliche Formulierung auf Basis eines Hart-Wachses, als Sekundärdispersion (eine Dispersion auf Basis eines Polyethylenoxidates) das im Bodenpflegemittelbereich bislang eingesetzt wird.

Zur Charakterisierung des auf der PVC-Unterlage erzeugten Films wurden Messungen des Glanzes (Messwinkel 85°) und der Haftreibung (ein im Bodenpflegebereich bekanntes Schustergerät) durchgeführt. Ein Zusammenhang zwischen den Begeheigenschaften, des Glanzes und der Haftreibung des Filmes konnte nicht ohne weiteres hergestellt werden. Dagegen ist ein deutlich erkennbarer Zusammenhang zwischen dem Wachscharakter und dem Ergebnis der Begehung zu erkennen. (Dabei bedeutet E Ethylen und AS Acrylsäure.)

Am günstigsten in der Begehung mit Note 1 haben die Abmischungen der Beispiele 26, 27 und 30 abgeschnitten; es handelt sich um Wachse des Beispiels 2 mit

21,5 Gew.% AS (MFI bei 190° C/2,16 kp = 125), des Beispiels 3 mit

23,9 Gew.% AS (MFI bei 190° C/2,16 kp = 32) und des Wachsbeispiels 4 mit

20,6 Gew.% AS (MFI bei 190° C/2,16 kp = 3,5).

Die Note 2 in der Begehung erhielten die Begehtest-Beispiele 22, 24 und 28. Es sind dies die Wachse nach Beispiel 1 (17% AS/MFI bei 190° C/2,16 kp = 220) sowie Wachsbeispiel 4 (20,6% AS/MFI bei 190° C/2,16 kp = 3,5). Mit Note 3 in der Begehung einzustufen ist das Vergleichsbeispiel 34 mit einem Polyethylenoxidat sowie in der untersuchten Zusammensetzung die Wachsbeispiele 1, 2, 4, 6 und 8.

Noten 4 und 5 haben die Vergleiche mit einem Wachs nach DE-OS 30 44 519 und einem handelsüblichen niedrigviskosen E-AS-Wachs, zu dem sich ein MFI-Wert unter den angegebenen Bedingungen nicht ermitteln lässt, ergeben.

Als überraschendes und unvorhergesehenes Ergebnis anzusehen ist die Tatsache, dass zur Herstellung hervorragender Bodenpflegeemulsionen Ethylen-Acrylsäure-Copolymer-Wachse mit einem hohen AS-Gehalt und einem hohen Molgewicht (niedrigem MFI-Wert) verwendet werden können. Diese Produkte sind auch den Polyethylenoxidaten mit hohem Molekulargewicht deutlich überlegen, wie das Vergleichsbeispiel zeigt. Die Tabelle zeigt, dass die Wachse mit einem MFI-Wert von 5 bis 500, gemessen bei 190° C und 2,16 kp, die bevorzugten sind.

*Tabelle II:* Sekundär-Emulsionen

| Emulsion Beispiel Nr. | Wachstyp Nr. Beispiel | Emulgierhilfsmittel Zusammensetzung** der Emulsion | Beurteilung der Emulsion | | | Transparenz |
|---|---|---|---|---|---|---|
| | | | Konsistenz Ford Becher Ø 4mm, 20°C | pH-Wert | Feinteiligkeit | |
| 10 | 1 | 20 % Wachs 1<br>2,9 % Tensid***<br>1,4 % KOH | 18 sec | 8,8 | stippenfrei, blauer Ablauf | 77 % |
| 11 | 1 | 20 % Wachs 1<br>1,1 % NaOH<br>1 % $NH_4OH$ | 20 sec | 10 | stippenfrei, klare Lösung | 83 % |
| 12 | 1 | 15 % Wachs 1<br>1,3 % KOH | 12 sec | 9,3 | stippenfrei, klare Lösung | 80 % |
| 13 | 2 | 15 % Wachs 2<br>1,4 % KOH | 20 sec | 9,1 | stippenfrei, blauer Ablauf | 87 % |
| 14 | 2 | 15 % Wachs 2<br>1,8 % KOH | 15 sec | 9 | stippenfrei, klare Lösung | 89 % |
| 15 | 3 | 15 % Wachs 3<br>1,4 % KOH | 1 min 45 sec | 9 | stippenfrei, klare Lösung | 80 % |
| 16 | 4 | 15 % Wachs 4<br>2,1 % Tensid***<br>1,1 % NaOH<br>0,28 % DEE | hochviskos über 3 min | 8,6 | stippenfrei, klare Lösung | 84 % |
| 17 | 4 | 15 % Wachs 4<br>2,1 % Tensid***<br>1,1 % NaOH<br>0,28 % DEE | 1 min 24 sec | 9,4 | etwas stippig, etwas dichter | 63 % |
| 18 | 4 | 15 % Wachs 4<br>1,3 % NaOH | 34 sec | 9,7 | viele feine Stippen, dichter | 44 % |
| 19 | 6 | 10 % Wachs 6<br>1,1 % NaOH | 14 sec | 12,6 | grobe Stippen, milchig | 15 % |
| 20 | 8 | 20 % Wachs 8<br>1,8 % NaOH | 13 sec | 9,5 | feine Stippen, transparent | 73 % |
| 21 | 9* | 27 % Wachs 9<br>5,6 % Tensid***<br>0,32 % KOH<br>0,35 % DEE | 28 sec | 10,7 | feine Stippen, milchig | 31 % |

* niedermol. Poly-E-AS mit 3,6% AS nach DE-OS 30 44 519 hergestellt
** jeweils ad 100% = Wasser
*** Tensid = $C_{13}/C_{15}$-Oxoalkohol mit 8 Ethylenoxid
DEE = Diethylethanolamin
E = Ethylen
AS = Acrylsäure

*Tabelle III*

| Beispiel Nr. | Sekundär-Emulsion Beispiel | Primärdispersion gemäss Beispiel III | Glanzmessung Messwinkel 85° | Haftreibung mit Schustergerät | Beurteilung nach 3wöchiger Begehung Note – Kommentar |
|---|---|---|---|---|---|
| 22 | 10 | Primärdispersion gemäss Beispiel III | 46 | 0,60 | 2 – geringe Anschmutzung |
| 23 | 11 | Primärdispersion gemäss Beispiel III | 65 | 0,55 | 3 – deutlich erkennbare Anschmutzung |
| 24 | 12 | Primärdispersion gemäss Beispiel III | 73 | 0,50 | 2 – geringe Anschmutzung |
| 25 | 13 | Primärdispersion gemäss Beispiel III | 51 | 0,55 | 3 – deutlich erkennbare Anschmutzung |
| 26 | 14 | Primärdispersion gemäss Beispiel III | 71 | 0,60 | 1 – sehr geringe Anschmutzung |
| 27 | 15 | Primärdispersion gemäss Beispiel III | 43 | 0,80 | 1 – sehr geringe Anschmutzung |
| 28 | 16 | Primärdispersion gemäss Beispiel III | 56 | 0,60 | 2 – geringe Anschmutzung |
| 29 | 17 | Primärdispersion gemäss Beispiel III | 70 | 0,55 | 3 – deutlich erkennbare Anschmutzung |
| 30 | 18 | Primärdispersion gemäss Beispiel III | 71 | 0,52 | 1 – sehr geringe Anschmutzung |
| 31 | 19 | Primärdispersion gemäss Beispiel III | 48 | 0,55 | 3 – deutlich erkennbare Anschmutzung |
| 32 | 20 | Primärdispersion gemäss Beispiel III | 50 | 0,60 | 3 – deutlich erkennbare Anschmutzung |
| 33 (Vergleich) | 21 | Primärdispersion gemäss Beispiel III | 44 | 0,50 | 4 – stärkere Anschmutzung |
| 34 | Polyethylenoxidat | Primärdispersion gemäss Beispiel III | 70 | 0,75 | 3 – deutlich erkennbare Anschmutzung |
| 35 | Poly-E-AS mit 17% AS 1200 cst/120°C | Primärdispersion gemäss Beispiel III | 41 | 0,70 | 5 – sehr starke Anschmutzung |

## Patentansprüche

1. Wachsdispersion für die Fussbodenpflege, enthaltend eine Mischung aus, bezogen auf das Gesamtgewicht der Wachsdispersion,

1. 5 bis 20 Gew.% einer wässerigen sekundären Wachsdispersion aus 5 bis 40 Gew.%, bezogen auf die sekundäre Wachsdispersion, eines Ethylencopolymerisatwachses, bestehend aus 10 bis 25 Gew.% einer α-olefinisch ungesättigten Mono- oder Dicarbonsäure mit 3 bis 8 C-Atomen und 90 bis 75 Gew.% Ethylen mit einem MFI-Wert, gemessen bei 190° C und 2,16 kp, von 1 bis 600 oder einem MFI-Wert, gemessen bei 160° C und 325 g, von 1 bis 600,
   0,1 bis 5 Gew.%, bezogen auf die sekundäre Wachsdispersion, Alkalihydroxid, Ammoniak, ein Alkanolamin oder ein Dialkylalkanolamin und ihre Mischungen,
   gegebenenfalls 1 bis 5 Gew.% eines nichtionischen oder anionischen Emulgators und Rest Wasser zu 100 Gew.%, bezogen auf das Gewicht der sekundären Wachsdispersion, und jeweils bezogen auf das Gesamtgewicht der Wachsdispersion
2. 20 bis 50 Gew.% einer wässerigen Primärdispersion mit einem Feststoffgehalt von 20 bis 70 Gew.%.
3. 1 bis 8 Gew.% eines oder mehrerer Weichmacher,
4. 0,2 bis 2 Gew.% Verlaufsmittel und
5. 73,8 bis 20 Gew.% Wasser.

2. Wachsdispersion nach Anspruch 1, enthaltend 5 bis 20 Gew.% einer wässerigen sekundären Wachsdispersion aus 5 bis 40 Gew.%, bezogen auf die sekundäre Wachsdispersion,eines Ethylencopolymerisatwachses, bestehend aus 15 bis 24 Gew.% Acrylsäure oder Methacrylsäure und ihre Mischungen und 85 bis 76 Gew.% Ethylen mit einem MFI-Wert, gemessen bei 190° C und 2,16 kp, von 5 bis 500,
1 bis 3 Gew.%, bezogen auf die sekundäre Wachsdispersion, Alkalihydroxid, Ammoniak, ein Alkanolamin, ein Dialkylalkanolamin und ihre Mischungen,
gegebenenfalls 1 bis 3 Gew.% eines nichtionischen oder anionischen Emulgators und Rest Wasser zu 100 Gew.%.

3. Verwendung von wässerigen Wachsdispersionen aus Ethylen-Copolymerisaten nach Anspruch 1 als sekundäre Wachsdispersion zusammen mit üblichen Primärdispersionen und Zusätzen für die Fussbodenpflege.

## Claims

1. A wax dispersion for floor care, which contains a mixture of, based on the total weight of the wax dispersion,

1. from 5 to 20% by weight of an aqueous secondary wax dispersion of from 5 to 40% by weight, based on the secondary wax dispersion, of an ethylene copolymer wax consisting of from 10 to 25% by weight of an α-olefinically unsaturated mono- or dicarboxylic acid of 3 to 8 carbon atoms and from 90 to 75% by weight of ethylene and having an MFI, measured at 190° C and under 2.16 kp, of from 1 to 600, or an MFI, measured at 160° C and under 325 g, of from 1 to 600,
   from 0.1 to 5% by weight, based on the secondary wax dispersion, of an alkali metal hydroxide, ammonia, an alkanolamine or a dialkylalkanolamine or a mixture of these,
   with or without from 1 to 5% by weight of a non-ionic or anionic emulsifier, and water to make up to 100% by weight, based on the weight of the secondary wax dispersion,
2. from 20 to 50% by weight of an aqueous primary dispersion having a solids content of from 20 to 70% by weight,
3. from 1 to 8% by weight of one or more plasticizers,
4. from 0.2 to 2% by weight of a leveling agent, and
5. from 73.8 to 20% by weight of water.

2. A wax dispersion as claimed in claim 1, which contains from 5 to 20% by weight of an aqueous secondary wax dispersion and from 5 to 40% by weight, based on the secondary wax dispersion, of an ethylene copolymer wax consisting of from 15 to 24% by weight of acrylic acid or methacrylic acid or a mixture of these, and from 85 to 76% by weight of ethylene and having an MFI, measured at 190° C and under 2.16 kp, of from 5 to 500,
from 1 to 3% by weight, based on the secondary wax dispersion, of an alkali metal hydroxide, ammonia, an alkanolamine, a dialkylalkanolamine or a mixture of these,
with or without from 1 to 3% by weight of a non-ionic or anionic emulsifier, and water to make up to 100% by weight.

3. The use of an aqueous wax dispersion as claimed in claim 1 and prepared from an ethylene copolymer as a secondary wax dispersion, together with a conventional primary dispersion and additives, for floor care.

## Revendications

1. Dispersion de cire pour l'entretien des sols, contenant, sur la base du poids total de la dispersion de cire, un mélange de

1. 5 à 20% en poids d'une dispersion aqueuse secondaire de cire formée de 5 à 40% en poids, sur la base de la dispersion secondaire de cire, d'un copolymère d'éthylène cireux se composant de 10 à 25% en poids d'un acide mono- ou dicarboxylique à 3-8 atomes de C insaturé α-oléfiniquement et de 90 à 75% en poids d'éthylène et ayant un MFI, mesuré à 190° C et sous une charge de 2,16 kp, de 1 à 600 ou un MFI, mesuré à 160° C et sous 325 g, de 1 à 600, de 0,1 à 5% en poids, sur la base de la dispersion secondaire de cire,

d'hydroxyde alcalin, d'ammoniac, d'une alcanolamine, d'une dialkylalcanolamine ou de leurs mélanges, le cas échéant de 1 à 5% en poids d'émulsifiant non ionique ou anionique, le reste à 100%, par rapport au poids de la dispersion secondaire de cire, étant constitué par de l'eau, et de

2. 20 à 50% en poids d'une dispersion aqueuse primaire ayant une teneur en matières solides de 20 à 70% en poids,
3. 1 à 8% en poids d'un ou de plusieurs plastifiants,
4. 0,2 à 2% en poids d'agent nivelant et
5. 73,8 à 20% en poids d'eau,

respectivement par rapport au poids total de la dispersion de cire.

2. Dispersion de cire selon la revendication 1, contenant 5 à 20% en poids d'une dispersion aqueuse secondaire de cire formée de 5 à 40% en poids, sur la base de la dispersion secondaire de cire, d'un copolymère d'éthylène cireux se composant de 15 à 24% en poids d'acide acrylique, d'acide méthacrylique ou de leurs mélanges et de 85 à 76% en poids d'éthylène et ayant un MFI, mesuré à 190° C et sous 2,16 kp, de 5 à 500, de 1 à 3% en poids, sur la base de la dispersion secondaire de cire, d'hydroxyde alcalin, d'ammoniac, d'une alcanolamine, d'une dialkylalcanolamine ou de leurs mélanges, le cas échéant de 1 à 3% en poids d'un émulsifiant non ionique ou anionique, le reste à 100% étant constitué par de l'eau.

3. Utilisation de dispersions aqueuses de cire à base de copolymères d'éthylène selon la revendication 1, en tant que dispersions de cire secondaires en combinaison avec des dispersions primaires et des additifs usuels, pour l'entretien de sols.